# EUROPÄISCHE PATENTANMELDUNG

(11) **EP 1 517 224 A2**
(43) Veröffentlichungstag der Anmeldung: **23.03.2005**
(21) Anmeldenummer: 04019005.0
(22) Anmeldetag: 11.08.2004
(51) Int. Cl.: G06F 3/00, G06F 3/033, B60K 37/06

(54) **Berührungsempfindliche Anzeigevorrichtung**

(30) Priorität: 16.09.2003 US 503188 P
(71) Anmelder: Volkswagen Aktiengesellschaft, 38436 Wolfsburg (DE)
(72) Erfinder: Schaaf, Klaus Dr., Sunnyvale,CA 94087 (US); Finn, Brian Michael, East Palo Alto,CA 94303 (US); Prados, Michael, Millbrae,CA 94030 (US); Stoschek, Arne, Palo Alto,CA 94303 (US)

(57) **Zusammenfassung**

Die Erfindung betrifft eine Anzeigevorrichtung mit einem Touchscreen zur optischen Darstellung von Informationen und zur Eingabe von Befehlen und einen Aktor zum Bewegen des Touchscreens in eine zum Touchscreen im wesentlichen senkrechte Richtung, wobei der Touchscreen mittels des Aktors um mehr als 2mm in die zum Touchscreen im wesentlichen senkrechte Richtung bewegbar ist.

## Beschreibung

Die Erfindung betrifft eine Anzeigevorrichtung, insbesondere für ein Kraftfahrzeug, mit einem Touchscreen zur optischen Darstellung von Informationen und zur Eingabe von Befehlen und mit einem Aktor zum Bewegen des Touchscreens in eine zum Touchscreen im wesentlichen senkrechte Richtung, sowie ein Verfahren zum Betrieb eines Touchscreens zur optischen Darstellung von Informationen und zur Eingabe von Befehlen.

Ein Touchscreen ist z.B. aus der DE 201 02 197 U1 (incorporated by reference) bekannt. In der DE 201 02 197 U1 ist ein Touchscreen zur Visualisierung von elektronischen Signalen und einer bestätigenden Berührungseingabe von Zeichen und Symbolen bestehend aus einer Funktionsebene zur Visualisierung und Tasteingabe und einer hierzu korrespondierenden, höher gelegenen, punktuell deformierbaren Schutzebene offenbart. Dabei wird bei einer Auswahl bestimmter Punkte der Funktionsebene mittels Berührung über die Schutzebene hinweg mindestens ein Bestätigungssignal für den Tastsinn (haptischer Reiz) des Benutzers wahrnehmbar an der Position des Berührungspunktes in der deformierten Schutzebene erzeugt und das Bestätigungssignal für den Tastsinn (haptischer Reiz) durch exzentrisch, inner- und/oder unterhalb der Funktionsebene angeordnete Schwingungselemente erzeugt. Zudem erfolgt bei dem aus der DE 201 02 197 U1 bekannten Touchscreen die Weiterleitung der erzeugten Schwingungen von der Funktions- auf die Schutzebene durch direkten Kontakt der beiden Ebenen und/oder über die Randbereiche der Ebenen durch starre oder elastische Verbindungselemente.

Einzelheiten zu Touchscreens könne z.B. der Internetseite www.3m.com/3mtouchsystems/ entnommen werden. Es werden z.B. folgende Touchscreens von 3M™ angeboten:
- MicroTouch™ 12.1" FPD Touch Monitor
   (vgl. www.3m.com/3mtouchsystems/Products/Monitors/FPDdesktop.jhtml)
- MicroTouch™ M150 FPD Touch Monitor
   (vgl. www.3m.com/3mtouchsystems/Products/Monitors/M150.jhtml)
- MicroTouch™ CRT Touch Monitors
   (vgl. www.3m.com/3mtouchsystems/Products/Monitors/CRTdesktop.jhtml)
- MicroTouch™ ChassisTouch™ FPD Touch Monitors
   (vgl. www.3m.com/3mtouchsystems/Products/Monitors/FPDchassis.jhtml)
- MicroTouch™ ChassisTouch™ CRT Touch Monitor
   (vgl. www.3m.com/3mtouchsystems/Products/Monitors/CRTchassis.jhtml)

Weitere Einzelheiten zu Touchscreens können den folgenden Internetseiten entnommen werden :
- www.elotouch.com/products/default.asp
- www.3m.com/3mtouchsystems/Products/Resistive/5-wire.jhtml
- www.3m.com/3mtouchsystems/Products/Resistive/PL.jhtml
- www.3m.com/3mtouchsystems/Products/Resistive/FG.jhtml
- www.3m.com/3mtouchsystems/Products/Resistive/SRTS.jhtml

Aus der DE 201 80 024 U1 bzw. der korrespondierenden WO 01/54109 A1 (incorporated by reference) ist zur haptischen Rückkopplung zudem eine Berührungssteuerung mit haptischer Rückkopplung zur Eingabe von Signalen in einen Computer und zur Ausgabe von Kräften an einen Benutzer der Berührungssteuerung bekannt, wobei die Berührungssteuerung ein Berührungseingabegerät aufweist, das eine annähernd ebene Berührungsoberfläche aufweist, die derart betrieben wird, dass sie aufgrund einer Position auf der Berührungsoberfläche, die ein Benutzer berührt, ein Positionssignal in einen Prozessor des Computers eingibt, wobei das Positionssignal die Position in zwei Dimensionen wiedergibt. Die Berührungssteuerung gemäß der WO 01/54109 A1 weist zudem mindestens einen mit dem Berührungseingabegerät verbundenen Aktor auf, wobei der Aktor eine Kraft auf das Berührungseingabegerät ausgibt, um dem die Berührungsoberfläche berührenden Benutzer eine haptische Empfindung zu liefern, wobei der Aktor die Kraft aufgrund einer von dem Prozessor ausgegebenen Kraftinformation direkt auf das Berührungseingabegerät ausgibt.

Haptische Rückkopplung ist zudem aus der US 6 429 846 und der WO 03/41046 A1 (incorporated by reference) bekannt.

Aus der DE 197 31 285 A1 ist ein Bedienelement für eine Einrichtung mit mehreren wählbaren Menüs, Funktionen und/oder Funktionswerten bekannt, die eine Oberfläche besitzt, die durch den Bediener erfassbar ist und über die die Auswahl durch eine lokale Bewegung bzw. Berührung der Oberfläche vernehmbar ist. Die Oberfläche ist in ihrer Gestalt entsprechend dem/der gewählten und/oder auswählbaren Menü, Funktion und/oder Funktionswert veränderbar.

Es ist Aufgabe der Erfindung, eine Anzeigevorrichtung bzw. ein Navigationssystem mit einem Touchscreen zu verbessern.

Die Aufgabe wird erfindungsgemäß durch eine Anzeigeeinrichtung mit den Merkmalen des Anspruches 1 und ein Verfahren mit den Merkmalen des Anspruchs 11 gelöst.

Weitere Ausgestaltungen der Erfindung ergeben sich aus den Unteransprüchen.

Vorgenannte Aufgabe wird durch eine Anzeigevorrichtung, insbesondere für ein Kraftfahrzeug, mit einem Touchscreen zur optischen Darstellung von, insbesondere für die Bedienung eines Kraftfahrzeuges relevanten, Informationen und zur Eingabe von, insbesondere für die Bedienung eines Kraftfahrzeuges relevanten, Befehlen und mit einem Aktor zum Bewegen des Touchscreens in eine zum Touchscreen im wesentlichen senkrechte Richtung gelöst, wobei der Touchscreen mittels des Aktors um mehr als 2mm in die zum Touchscreen im wesentlichen senkrechte Richtung bewegbar ist.

Vorgenannte Aufgabe wird zudem durch eine Anzeigevorrichtung, insbesondere für ein Kraftfahrzeug, mit einem Touchscreen zur optischen Darstellung von, insbesondere für die Bedienung eines Kraftfahrzeuges relevanten, Informationen und zur Eingabe von, insbesondere für die Bedienung eines Kraftfahrzeuges relevanten, Befehlen, mit einem Aktor zum Bewegen des Touchscreens, insbesondere in eine zum Touchscreen im wesentlichen senkrechte Richtung, und mit einer Steuerung zum Ansteuern den Aktors gelöst, wobei der Aktor mittels der Steuerung derart ansteuerbar ist, dass der Touchscreen mittels des Aktors zur Bestätigung eines mittels des Touchscreens eingegebenen Befehls, insbesondere um zumindest 2mm, in die zum Touchscreen im wesentlichen senkrechte Richtung bewegbar ist.

Als Aktor kommt insbesondere eine Spule wie z.B. eine so genannte voice coil in Frage.

In Ausgestaltung der Erfindung ist der Touchscreen mittels des Aktors um mehr als 3mm, insbesondere um mehr als 4mm bis 6mm, in die zum Touchscreen im wesentlichen senkrechte Richtung bewegbar.

In weiterer Ausgestaltung der Erfindung umfasst die Anzeigevorrichtung eine Steuerung zum Ansteuern des Aktors, wobei der Aktor mittels der Steuerung derart ansteuerbar ist, dass der Touchscreen mittels des Aktors zur Bestätigung eines mittels des Touchscreens eingegebenen Befehls in die zum Touchscreen im wesentlichen senkrechte Richtung bewegbar ist.

In weiterer Ausgestaltung der Erfindung ist der Touchscreen zur Bestätigung des mittels des Touchscreens eingegebenen Befehls für eine Dauer zwischen 50ms und 800ms, insbesondere für eine Dauer zwischen 100ms und 400ms, in die zum Touchscreen im wesentlichen senkrechte Richtung bewegbar.

In weiterer Ausgestaltung der Erfindung ist der Touchscreen zur Bestätigung des mittels des Touchscreens eingegebenen Befehls periodisch in die zum Touchscreen im wesentlichen senkrechte Richtung bewegbar.

In weiterer Ausgestaltung der Erfindung ist der Touchscreen zur Bestätigung des mittels des Touchscreens eingegebenen Befehls mit einer abklingenden Schwingung in die zum Touchscreen im wesentlichen senkrechte Richtung bewegbar.

In weiterer Ausgestaltung der Erfindung weist die abklingende Schwingung eine Hüllkurve mit einem exponentiellen Anteil auf. Dabei weist die Hüllkurve z.B. einen Term t^{a} oder einen Term b^{t} auf, wobei t die Zeit ist und a und b Variablen sind. So kann die Hüllkurve eine Funktion von a1 + a2. t^{a3} oder b1 + b2^{t} sein, wobei a1, a2, a3, b1 und b2 Variablen sind. Es hat sich in Versuchen mit Testpersonen als vorteilhaft erwiesen, wenn die Hüllkurve als höchste Potenz einen Term t² enthält.

In weiterer Ausgestaltung der Erfindung ist der Touchscreen zur Bestätigung des mittels des Touchscreens eingegebenen Befehls periodisch mit einer Frequenz zwischen 10 und 80Hz in die zum Touchscreen im wesentlichen senkrechte Richtung bewegbar. Dabei hat sich in Versuchen mit Testpersonen eine Frequenz von um die 40Hz als vorteilhaft erwiesen.

In weiterer Ausgestaltung der Erfindung ist der Aktor mittels der Steuerung zudem derart ansteuerbar, dass der Touchscreen in die zum Touchscreen im wesentlichen senkrechte Richtung bewegbar ist, wenn ein Benutzer des Touchscreens diesen an einer mittels des Touchscreens anzeigbaren Stelle berührt. Die so anzeigbare Stelle kann z.B. ein auf dem Touchscreen dargestelltes Bedienelement, eine auf dem Touchscreen dargestellte Taste, eine auf dem Touchscreen dargestellte Straße, eine auf dem Touchscreen dargestellte Ansiedlung oder eine auf dem Touchscreen dargestellte Ortsangabe sein.

Vorgenannte Aufgabe wird zudem durch ein Navigationssystem, insbesondere für ein Kraftfahrzeug, mit einem Touchscreen zur optischen Darstellung einer Land- oder Straßenkarte und zur Erkennung einer Berührung des Touchscreens (durch einen Benutzer des Navigationssystems) und einen Aktor zum Bewegen des Touchscreens in eine zum Touchscreen im wesentlichen senkrechte Richtung in Abhängigkeit einer Position der Berührung des Touchscreens (durch den Benutzer) gelöst. In einer Ausgestaltung weist das Navigationssystem eine Anzeigevorrichtung mit einem oder mehreren der vorgenannten Merkmale auf.

In weiterer Ausgestaltung der Erfindung ist auf dem Touchscreen eine Straße darstellbar, wobei die auf dem Touchscreen dargestellte Straße bei Berührung durch den Benutzer durch ein Bewegen des Touchscreens für den Tastsinn des Benutzers erkennbar ist.

In weiterer Ausgestaltung der Erfindung ist auf dem Touchscreen eine Ansiedlung darstellbar, wobei die auf dem Touchscreen dargestellte Ansiedlung bei Berührung durch den Benutzer durch ein Bewegen des Touchscreens für den Tastsinn des Benutzers erkennbar ist.

In weiterer Ausgestaltung der Erfindung ist auf dem Touchscreen eine Ortsangabe darstellbar, wobei die auf dem Touchscreen dargestellte Ortsangabe bei Berührung durch den Benutzer durch ein Bewegen des Touchscreens für den Tastsinn des Benutzers erkennbar ist.

Auf dem Touchscreen können auch weitere markante Geländepunkte darstellbar sein. Es kann vorgesehen sein, dass diese oder ein Teil von diesen auf dem Touchscreen darstellbaren markanten Geländepunkten bei Berührung durch den Benutzer durch ein Bewegen des Touchscreens für den Tastsinn des Benutzers erkennbar sind.

Vorgenannte Aufgabe wird zudem durch ein Verfahren zum Betrieb eines Touchscreens zur optischen Darstellung von Informationen und zur Eingabe von Befehlen gelöst, bei dem der Touchscreen um mehr als 2mm in eine zum Touchscreen im wesentlichen senkrechte Richtung bewegt wird.

Vorgenannte Aufgabe wird zudem durch ein Verfahren zum Betrieb eines Touchscreens zur optischen Darstellung von Informationen und zur Eingabe von Befehlen gelöst, wobei der Touchscreen zum Bestätigen eines mittels des Touchscreens eingegebenen Befehls in eine zum Touchscreen im wesentlichen senkrechte Richtung bewegt wird. Dabei wird in weiterer Ausgestaltung der Erfindung der Touchscreen um mehr als 2mm in die zum Touchscreen im wesentlichen senkrechte Richtung bewegt.

In weiterer Ausgestaltung vorgenannter Verfahren wird der Touchscreen um mehr als 3mm, insbesondere um mehr als 4mm, in die zum Touchscreen im wesentlichen senkrechte Richtung bewegt.

In weiterer Ausgestaltung vorgenannter Verfahren wird der Touchscreen zur Bestätigung des mittels des Touchscreens eingegebenen Befehls für eine Dauer zwischen 50ms und 800ms, insbesondere für eine Dauer zwischen 100ms und 400ms, in die zum Touchscreen im wesentlichen senkrechte Richtung bewegt.

In weiterer Ausgestaltung vorgenannter Verfahren wird der Touchscreen zur Bestätigung des mittels des Touchscreens eingegebenen Befehls periodisch in die zum Touchscreen im wesentlichen senkrechte Richtung bewegt.

In weiterer Ausgestaltung vorgenannter Verfahren wird der Touchscreen zur Bestätigung des mittels des Touchscreens eingegebenen Befehls periodisch mit einer Frequenz zwischen 10 und 80Hz in die zum Touchscreen im wesentlichen senkrechte Richtung bewegt.

In weiterer Ausgestaltung vorgenannter Verfahren wird der Touchscreen zur Bestätigung des mittels des Touchscreens eingegebenen Befehls mit einer abklingenden Schwingung in die zum Touchscreen im wesentlichen senkrechte Richtung bewegt.

In weiterer Ausgestaltung vorgenannter Verfahren wird der Touchscreen in die zum Touchscreen im wesentlichen senkrechte Richtung bewegt, wenn ein Benutzer des Touchscreens diesen an einer mittels des Touchscreens anzeigbaren Stelle berührt.

Vorgenannte Aufgabe wird zudem durch ein Verfahren zum Betrieb eines Navigationssystems mit einem Touchscreen zur optischen Darstellung einer Land- oder Straßenkarte gelöst, wobei das Verfahren eine Erkennung einer Berührung des Touchscreens durch einen Benutzer des Navigationssystems an einer auf dem Touchscreen zur Hervorhebung markierten Position und ein Bewegen des Touchscreens in eine zum Touchscreen im wesentlichen senkrechte Richtung umfasst.

Eine senkrechte Bewegung des Touchscreens schließt nicht aus, dass der Touchscreen gleichzeitig auch in andere Richtungen bewegbar ist. Eine senkrechte Bewegung des Touchscreens im Sinne der Erfindung heißt somit insbesondere, dass eine Bewegung eine entsprechende senkrechte Komponente aufweist. Vorteilhaft ist es jedoch, wenn der Touchscreen nur in einem Bereich von 80° bis 100° bewegt wird, wenn im Vorgenannten eine Bewegung in eine im wesentlichen senkrechte Richtung zum Touchscreen erwähnt ist.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

In den nachfolgenden Zeichnungen und den zugehörigen Beschreibungen wird die Erfindung anhand von Ausführungsbeispielen näher beschrieben.
Es zeigen:
- Fig. 1: zeigt ein Ausführungsbeispiel für ein Cockpit eines Kraftfahrzeuges;
- Fig. 2: zeigt ein weiteres Ausführungsbeispiel für ein Cockpit eines Kraftfahrzeuges;
- Fig. 3: zeigt eine Anzeigevorrichtung;
- Fig.4: zeigt eine Bewegung des Touchscreens in eine zum Touchscreen im wesentlichen senkrechte Richtung;
- Fig. 5: zeigt eine Bewegung des Touchscreens in eine zum Touchscreen im wesentlichen senkrechte Richtung;
- Fig. 6: zeigt ein bevorzugtes Steuersignal zur Bewegung des Touchscreens in eine zum Touchscreen im wesentlichen senkrechte Richtung;
- Fig.7: zeigt ein Ausführungsbeispiel für eine mittels einer Anzeigevorrichtung dargestellte Grundmaske;
- Fig. 8: zeigt ein Ausführungsbeispiel für eine Maske zur Bedienung einer Klimaanlage;
- Fig. 9: zeigt ein Ausführungsbeispiel für eine Maske zur Bedienung eines Navigationssystems;
- Fig. 10: zeigt ein Ausführungsbeispiel für eine Untermaske zur Bedienung eines Navigationssystems;
- Fig. 11: zeigt ein Ausführungsbeispiel für eine weitere Untermaske zur Bedienung eines Navigationssystems und
- Fig. 12: zeigt ein Ausführungsbeispiel für eine Maske zur Bedienung eines Telefons.

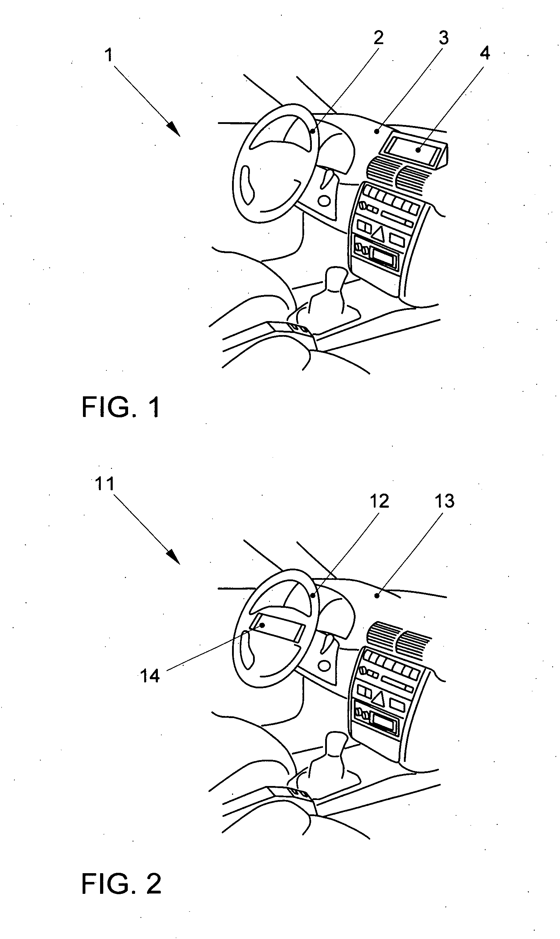

Fig. 1 zeigt ein Ausführungsbeispiel für ein Cockpit 1 eines Kraftfahrzeuges. In dem Cockpit 1 ist unterhalb eines Armaturenbretts 3 ein Lenkrad 2 angeordnet. Das Armaturenbrett 3 weist eine neben dem Lenkrad 2 angeordnete Anzeigevorrichtung 4 auf. Fig. 2 zeigt ein alternatives Ausführungsbeispiel für ein Cockpit 11 eines Kraftfahrzeuges, wobei in dem Cockpit 11 ebenfalls unterhalb eines Armaturenbretts 13 ein Lenkrad 12 angeordnet ist. In dem Lenkrad 12 ist jedoch abweichend von dem Ausführungsbeispiel gemäß Fig. 1 eine Anzeigevorrichtung 14 angeordnet.

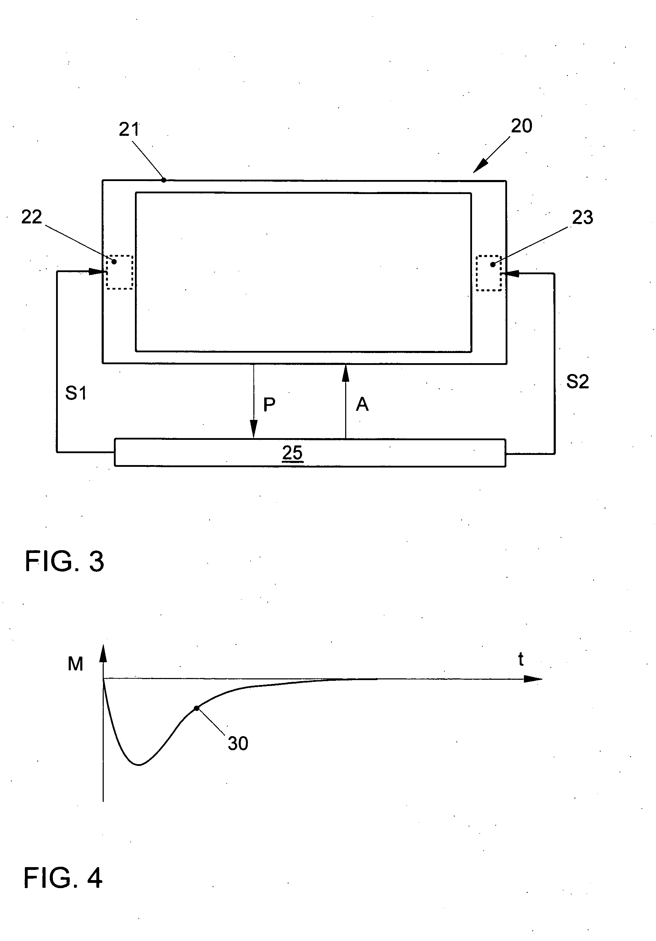

Fig. 3 zeigt - als mögliches Ausführungsbeispiel einer Anzeigevorrichtung 4 oder 14 - eine Anzeigevorrichtung 20 mit einem in Draufsicht dargestellten Touchscreen 21 zur optischen Darstellung von Informationen und zur Eingabe von Befehlen. Der Touchscreen 21 ist datentechnisch mit einer Steuerung 25 verbunden, von der dem Touchscreen 21 ein Signal A mit auf dem Touchscreen 21 darzustellenden Informationen übermittelt wird. Von dem Touchscreen 21 erhält die Steuerung 25 ein Signal P, das angibt, wo ein Benutzer des Touchscreens 21 den Touchscreen 21 berührt und/oder - sofern vorgesehen - ob der Benutzer derart auf eine als Eingabeposition gekennzeichnete Position auf den Touchscreen 21 drückt, dass dies als Eingabe zu verstehen ist.

Die Anzeigevorrichtung 20 weist an den seitlichen Rändern des Touchscreens 21 Aktoren 22 und 23 zum Bewegen des Touchscreens 21 in eine zum Touchscreen 21 im wesentlichen senkrechte Richtung auf. Den Aktoren 22 und 23 werden von der Steuerung 25 Steuersignale S1 und S2 übermittelt, mittel derer die Aktoren 22 und 23 derart angesteuert werden, dass der Touchscreen 21 um zumindest 2mm, insbesondere um etwa 4mm, in die zum Touchscreen 21 im wesentlichen senkrechte Richtung bewegt werden kann.

Es kann vorgesehen sein, dass eine Eingabe durch einfaches Berühren des Touchscreens 21 erfolgt. Es kann aber auch vorgesehen sein, dass eine Eingabe nicht schon durch einfaches Berühren des Touchscreens 21 sondern durch (leichtes) Drücken auf den Touchscreen 21 erfolgt. In diesem Fall kann vorgesehen werden, dass der Touchscreen 21 nicht nur zur Bestätigung eines mittels des Touchscreens 21 eingegebenen Befehls sondern auch bei Berührung bestimmter Positionen auf dem Touchscreen 21 bewegt wird, wobei sich die Bewegungen für einen Benutzer unterscheiden lassen. So ist vorteilhafterweise vorgesehen, dass eine durch eine Berührung einer bestimmten Positionen auf dem Touchscreen 21 bedingte Auslenkung des Touchscreens 21 so lange bestehen bleibt, wie die Berührung dieser oder einer anderen zu einer vergleichbaren Auslenkung führenden Position anhält. Als Bestätigung der Eingabe eines Befehls erfolgt dagegen eine kurzzeitige Auslenkung, wie es im folgenden mit Bezugnahme auf Fig. 4, Fig. 5 und Fig. 6 erläutert ist.

Fig. 4 zeigt ein Ausführungsbeispiel einer Bewegung 30 des Touchscreens 21 als Bestätigung einer Eingabe mittels des Touchscreens 21 über die Zeit t dargestellt. M bezeichnet dabei die Auslenkung des Touchscreens 21 in eine zum Touchscreen 21 senkrechte Richtung. Die Auslenkung des Touchscreens 21 erfolgt dabei vorteilhafterweise für eine Dauer zwischen 50ms und 800ms, insbesondere für eine Dauer zwischen 100ms und 400ms.

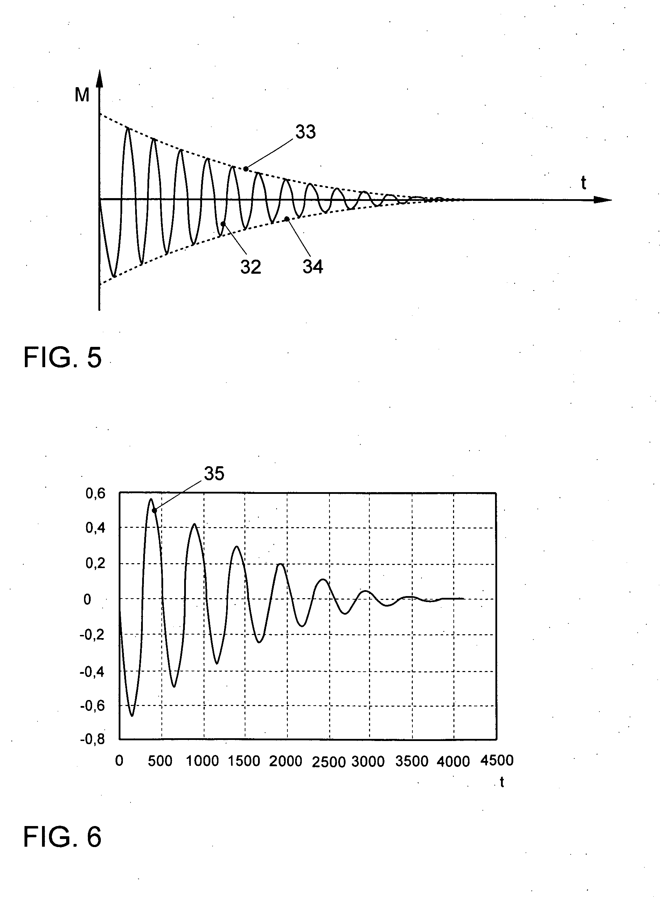

In vorteilhafter Ausgestaltung ist der Touchscreen 21 zur Bestätigung des mittels des Touchscreens eingegebenen Befehls - wie in Fig. 5 als Auslenkung M des Touchscreens 21 über die Zeit t dargestellt - mit einer abklingenden Schwingung 32 in die zum Touchscreen 21 senkrechte Richtung bewegbar. Die abklingende Schwingung 32 weist eine Hüllkurve 33 bzw. 34 mit einem exponentiellen Anteil auf. Dabei weist die Hüllkurve 33 bzw. 34 z.B. einen Term t^{a} oder einen Term b^{t} auf, wobei a und b Variablen sind. So kann die Hüllkurve 33 bzw. 34 eine Funktion von a1 + a2· t^{a3} oder b1 + b2^{t} sein, wobei a1, a2, a3, b1 und b2 Variablen sind. Es hat sich in Versuchen mit Testpersonen als vorteilhaft erwiesen, wenn die Hüllkurve 33 bzw. 34 als höchste Potenz einen Term t² enthält.

Zudem besetzt die abklingende Schwingung 32 eine Frequenz zwischen 10 und 80Hz. Dabei hat sich in Versuchen mit Testpersonen eine Frequenz von um die 40Hz als vorteilhaft erwiesen.

Fig. 6 zeigt ein bevorzugtes Steuersignal 35 zur Bewegung des Touchscreens 21 in eine zum Touchscreen 21 im wesentlichen senkrechte Richtung über die Zeit t in Abtastpunkten, wobei ein Abtastintervall 51,2 µs beträgt. Das Steuersignal 35 ist auf seinen Höchstwert normiert dargestellt. Es besitz eine Frequenz von 38,1 Hz und ist nach 210ms abgeklungen, wobei das Abklingen gemäß einem quadratischen Zusammenhang erfolgt.

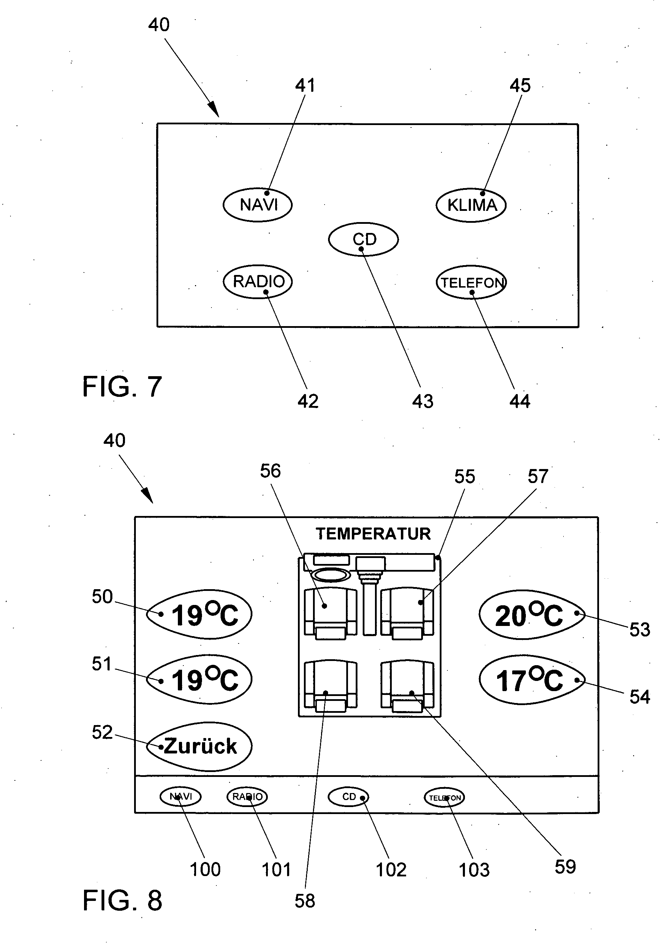

Die entsprechend der Anzeigevorrichtung 20 ausgestalteten Anzeigevorrichtungen 4 und 14 können in vorteilhafter Ausgestaltung z.B. eine in der WO 00/21795 (incorporated by reference) offenbarte Anzeige- und Bedienungseinrichtung unter Beibehaltung deren menügeführter Funktionalität ersetzen. Fig. 7, Fig. 8, Fig. 9, Fig. 10, Fig. 11 und Fig. 12 zeigen verschiedene Masken, die mittels einer Anzeigevorrichtung 40 darstellbar sind. Die Anzeigevorrichtung 40 ist dabei entsprechend der Anzeigevorrichtung 20 ausgestaltet.

In Fig. 7 ist die Anzeigevorrichtung 40 mit einer Grund-Maske dargestellt. Dabei stellt die Anzeigevorrichtung 40 fünf durch Ellipsen ausgeführte Bedienelemente 41, 42, 43, 44 und 45 dar. Durch Berühren bzw. Drücken des Bedienelementes 42 in Fig. 7 wird eine Maske zur Bedienung eines Radios aufgerufen, und durch Berühren bzw. Drücken des Bedienelementes 43 in Fig. 7 wird eine Maske zur Bedienung eines CD-Spielers aufgerufen.

Durch Berühren bzw. Drücken des Bedienelementes 45 in Fig. 7 wird eine in Fig. 8 dargestellte Maske zur Bedienung einer Klimaanlage aufgerufen. In der in Fig. 8 dargestellten Maske sind Temperaturangaben der einzelnen Orte im Fahrzeuginnenraum zusammen mit Bedienelementen 50, 51, 52, 53 und 54 dargestellt, wobei die Temperaturangaben sich auf aktuell eingestellte Temperaturen beziehen, die über die Bedienelemente 50, 51, 53 und 54 verändert werden können.

Die Darstellung gemäß Fig. 8 mit der Überschrift ,TEMPERATUR' und der Anzeige eines Innenraumes 55 eines Kraftfahrzeuges macht deutlich, dass die Temperatureinstellung im Fahrzeuginneren individuell und sitzplatzbezogen einstellbar ist. Das Bedienelement 50 zeigt für den vorderen Fahrzeugführersitz 56 an, dass eine Temperatur von 19°C eingestellt ist. Das Bedienelement 53 zeigt für den vorderen Beifahrersitz 57 an, dass eine Temperatur von 20°C eingestellt ist. Für die Fondsitze 58 und 59 sind auf der linken Seite 19°C und auf der rechten Seite 17 °C eingestellt. Das Bedienelement 52 hat eine Zuweisung, d. h. eine Funktionszuweisung, die im Displayfeld mit "Zurück" dargestellt ist.

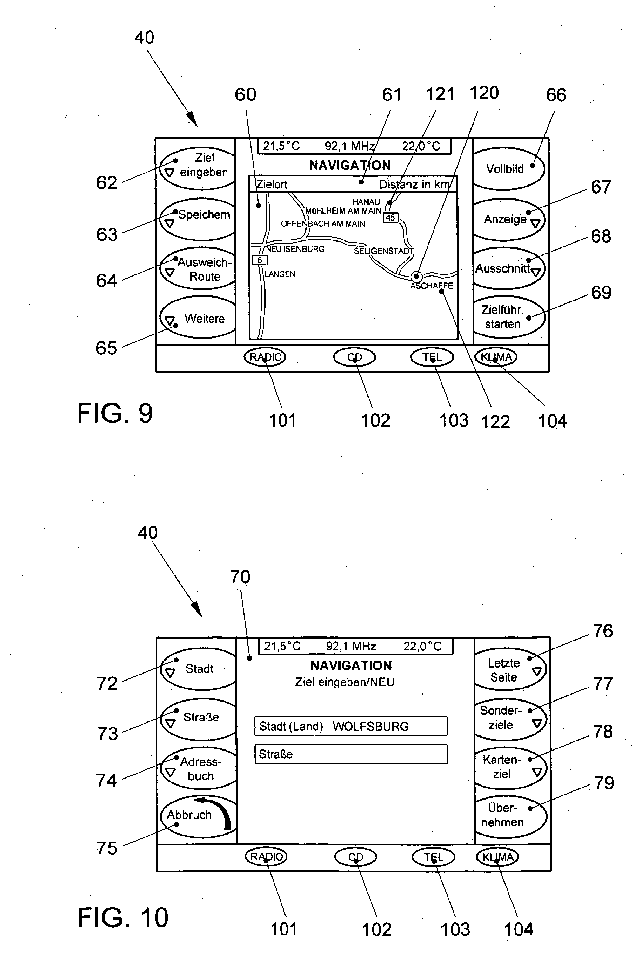

Durch Berühren bzw. Drücken des Bedienelementes 41 in Fig. 7 wird eine in Fig. 9 dargestellte Maske zur Bedienung eines Navigationssystems aufgerufen. Die Maske zeigt einen Ausschnitt der Straßenkarte 60 des momentanen Fahrzeugortes sowie oberhalb der Straßenkarte 60 in einem Feld 61 den Zielort und die Entfernung bis zum Zielort. Zudem werden Bedienelemente 62, 63, 64, 65, 67 und 68 dargestellt, mittels derer durch Berühren bzw. Drücken Untermasken aufgerufen werden können. Es werden außerdem ein Bedienelement 66 zur Darstellung eines Vollbildes und ein Bedienelement 69 zum Starten einer Zielführung dargestellt. In Bezug auf Einzelheiten des unterlegten Menüs sei auf die WO 00/21795 verwiesen, wobei die Bedienelemente 62, 63, 64, 65, 66, 67, 68 und 69 die in der WO 00/21795 offenbarten Bedienelemente 3a, 3b, 3c, 3d, 3e, 3f, 3g und 3h ersetzen.

Durch Berühren bzw. Drücken des Bedienelementes 62 in Fig. 9 wird eine Untermaske gemäß Fig. 10 aufgerufen, die in einem Feld 70 das Fahrtziel anzeigt. Mittels der Untermaske gemäß Fig. 10 werden zudem Bedienelemente 72, 73, 74, 75, 76, 77, 78 und 79 dargestellt. In Bezug auf Einzelheiten des unterlegten Menüs sei ebenfalls auf die WO 00/21795 verwiesen, wobei die auf dem Display dargestellten Bedienelemente 72, 73, 74, 75, 76, 77, 78 und 79 die in der WO 00/21795 offenbarten Bedienelemente 3a, 3b, 3c, 3d, 3e, 3f, 3g und 3h ersetzen.

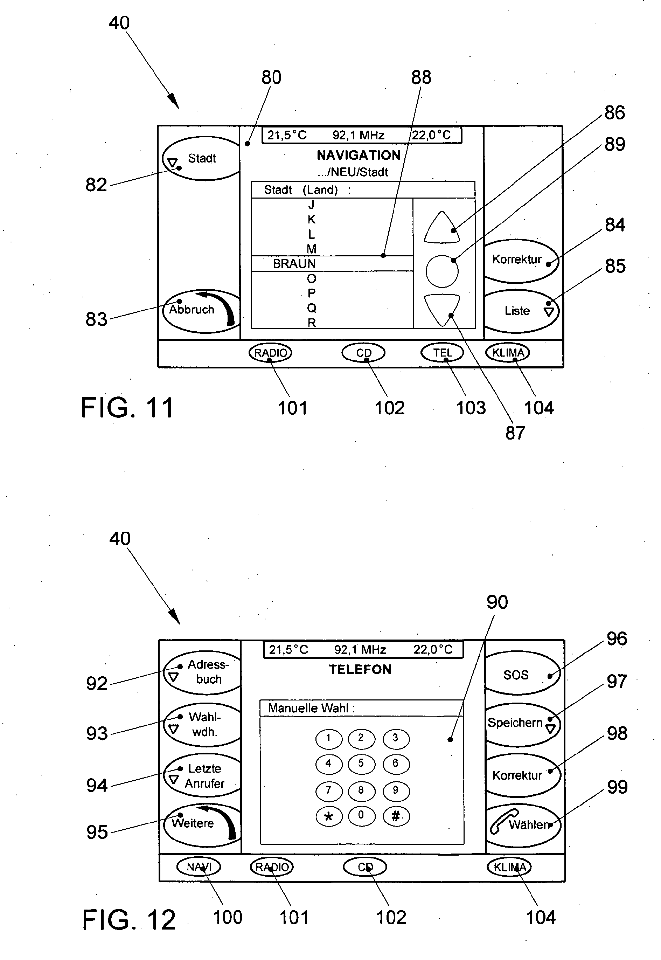

Durch Berühren bzw. Drücken des Bedienelementes 72 in Fig. 10 wird eine Untermaske gemäß Fig. 11 aufgerufen, die in einem Feld 80 einen einzugebenden Zielort anzeigt. Mittels der Untermaske gemäß Fig. 11 werden zudem Bedienelemente 82, 83, 84 und 85 angezeigt, die die in der WO 00/21795 offenbarten Bedienelemente 3a, 3d, 3g und 3h ersetzen. In dem Feld 80 sind eine Buchstabenauswahlzeile 88 sowie Bedienelemente 86, 87 und 89 dargestellt. Die Buchstabenauswahlzeile 88 ist durch Berühren bzw. Drücken der Bedienelemente 86 bzw. 87 nach oben bzw. nach unten bewegbar. Durch Berühren bzw. Drücken des Bedienelementes 89 kann ein markierter Buchstabe ausgewählt werden.

Durch Berühren bzw. Drücken des Bedienelementes 44 in Fig. 7 wird eine in Fig. 12 dargestellte Maske zur Bedienung eines Telefons aufgerufen, die in einem Feld 90 Wahltasten für ein Telefon anzeigt. Mittels der Untermaske gemäß Fig. 12 werden zudem Bedienelemente 92, 93, 94, 95, 96, 97, 98 und 99 angezeigt, die die in der WO 00/21795 offenbarten Bedienelemente 3a, 3b, 3c, 3d, 3e, 3f, 3g und 3h ersetzen. Die im Feld 90 dargestellten Wahltasten für ein Telefon sind als Bedienelemente ausgestaltet, mittels derer eine Telefonnummer wählbar ist.

In den Masken und Untermasken gemäß Fig. 7, Fig. 8, Fig. 9, Fig. 10, Fig. 11 bzw. Fig. 12 sind zudem Bedienelemente 100, 101, 102, 103 und 104 dargestellt, die den Bedienelementen 41, 42, 43, 44 und 45 entsprechen.

Mittels der Bedienelemente 41, 42, 43, 44, 45, 50, 51, 52, 53, 54, 62, 63, 64, 65, 66, 67, 68, 69, 72, 73, 74, 75, 76, 77, 78, 79, 82, 83, 84, 85, 86, 87, 89, 92, 93, 94, 95, 96, 97, 98, 99, 100, 101, 102, 103 und 104 wird eine haptische Rückkopplung erzeugt. Dazu wird der Touchscreen der Anzeige 40 in einer mit Bezugnahme auf Fig. 4, Fig. 5 bzw. Fig. 6 beschriebenen Weise dann bewegt, wenn durch Berühren bzw. Drücken des entsprechenden Bedienelementes 41, 42, 43, 44, 45, 50, 51, 52, 53, 54, 62, 63, 64, 65, 66, 67, 68, 69, 72, 73, 74, 75, 76, 77, 78, 79, 82, 83, 84, 85, 86, 87, 89, 92, 93, 94, 95, 96, 97, 98, 99, 101, 102, 103, 104 bzw. 105 eine Benutzereingabe erfolgt ist, d.h. wenn die Berührung z.B. lang genug erfolgt ist und/oder genügend Druck auf den Touchscreen ausgeübt worden ist. Dies ist für den Einsatz in einem Kraftfahrzeug besonders vorteilhaft, da ein Bediener, also z.B. der Fahrer eines Kraftfahrzeuges, auf diese Weise eine Bestätigung seiner Eingabe erhält, ohne auf die Anzeige schauen zu müssen. Auf diese Weise wird die Sicherheit während einer Fahrt erhöht.

Es kann vorgesehen sein, dass der Touchscreen in Richtung auf einen Benutzer bewegt wird, wenn Bedienelement 41, 42, 43, 44, 45, 50, 51, 52, 53, 54, 62, 63, 64, 65, 66, 67, 68, 69, 72, 73, 74, 75, 76, 77, 78, 79, 82, 83, 84, 85, 86, 87, 89, 92, 93, 94, 95, 96, 97, 98, 99, 101, 102, 103, 104 bzw. 105 berührt wird, so dass sich für den Benutzer das Gefühl eines dreidimensionalen Bedienelementes einstellt. Es kann weiter vorgesehen werden, das die Berührung des entsprechenden Bedienelementes 41, 42, 43, 44, 45, 50, 51, 52, 53, 54, 62, 63, 64, 65, 66, 67, 68, 69, 72, 73, 74, 75, 76, 77, 78, 79, 82, 83, 84, 85, 86, 87, 89, 92, 93, 94, 95, 96, 97, 98, 99, 101, 102, 103, 104 bzw. 105 erst nach Ablauf einer kurzen Zeitspanne als Benutzereingabe interpretiert wird. In diesem Fall wird der Touchscreen der Anzeige 40 in einer mit Bezugnahme auf Fig. 4, Fig. 5 bzw. Fig. 6 beschriebenen Weise bewegt.

In vorteilhafter Weise ist vorgesehen, eine haptische Rückkopplung in Bezug auf die Straßenkarte 60 in Feld 61 in Fig. 9 vorzusehen. So kann z.B. vorgesehen sein, dass der Touchscreen in Richtung auf einen Benutzer bewegt wird, wenn eine Ansiedlung 120, eine Straße 121 oder eine Ortsangabe 122 berührt wird, so dass sich für den Benutzer das Gefühl einer dreidimensionalen Kontur der Straßenkarte 60 einstellt. Es kann zudem vorgesehen sein, dass eine Zielortseingabe durch Berühren einer Ortsangabe 122 auf der Straßenkarte 60 erfolgt. Dabei ist in vorteilhafter Weise vorgesehen, dass dem Benutzer eine erfolgreiche Auswahl durch eine mit Bezugnahme auf Fig. 4, Fig. 5 bzw. Fig. 6 beschriebene haptische Rückkopplung erfolgt.

Die erfindungsgemäße Vorrichtung ist auch auf eine multifunktionale Bedieneinrichtung gemäß der DE 101 39 693 A1 (incorporated by reference) übertragbar, wobei z.B. das in der DE 101 39 693 A1 offenbarte Drehelement durch Bedienelemente ersetzt werden kann, die entsprechend den Bedienelementen 86 und 87 ausgestaltet sind.

### BEZUGSZEICHENLISTE

- 1, 11: Cockpit
- 2, 12: Lenkrad
- 3, 13: Armaturenbrett
- 4, 14, 20, 40: Anzeigevorrichtung
- 21: Touchscreen
- 22, 23: Aktor
- 25: Steuerung
- 30: Bewegung
- 32: Schwingung
- 33, 34: Hüllkurve
- 35: Steuersignal
- 41, 42, 43, 44, 45, 50, 51, 52, 53, 54 62, 63, 64, 65, 66, 67, 68, 69, 72, 73, 74, 75, 76, 77, 78, 79, 82, 83, 84, 85, 86, 87, 89, 92, 93, 94, 95, 96, 97, 98, 99, 100, 101, 102, 103,104: Bedienelemente
- 55: Innenraum
- 56: Fahrzeugführersitz
- 57: Beifahrersitz
- 58, 59: Fondsitz
- 60: Straßenkarte
- 61, 70, 80, 90: Feld
- 88: Buchstabenauswahlzeile
- 120: Ansiedlung
- 121: Straße
- 122: Ortsangabe

- A, P: Signal
- a, a1, a2, a3, b, b1, b2: Variable
- S1, S2: Steuersignale
- t: Zeit

## Patentansprüche

1. Anzeigevorrichtung (4,14,20,40), die einen Touchscreen (21) zur optischen Darstellung von Informationen und zur Eingabe von Befehlen, einen Aktor (22,23) zum Bewegen des Touchscreens (21) in eine zum Touchscreen (21) im wesentlichen senkrechte Richtung und eine Steuerung (25) zum Ansteuern des Aktor (22,23) aufweist
**dadurch gekennzeichnet, dass**
der Aktor (22,23) mittels der Steuerung (25) derart ansteuerbar ist, dass der Touchscreen (21) mittels des Aktor (22,23) zur Bestätigung eines mittels des Touchscreens (21) eingegebenen Befehls in die zum Touchscreen (21) im wesentlichen senkrechte Richtung bewegbar ist.

2. Anzeigevorrichtung (4,14,20,40) nach Anspruch 1,
**dadurch gekennzeichnet, dass**
der Touchscreen (21) mittels des Aktor (22,23) um mehr als 2mm, vorzugsweise um mehr als 3mm, insbesondere um mehr als 4mm in die zum Touchscreen (21) im wesentlichen senkrechte Richtung bewegbar ist.

3. Anzeigevorrichtung (4,14,20,40) nach Anspruch 1 oder 2,
**dadurch gekennzeichnet, dass**
der Touchscreen (21) zur Bestätigung des mittels des Touchscreens (21) eingegebenen Befehls für eine Dauer zwischen 50ms und 800ms, vorzugsweise zwischen 100ms und 400ms in die zum Touchscreen (21) im wesentlichen senkrechte Richtung bewegbar ist.

4. Anzeigevorrichtung (4,14,20,40) nach einem oder mehreren der vorhergehenden Ansprüche,
**dadurch gekennzeichnet, dass**
der Touchscreen (21) zur Bestätigung des mittels des Touchscreens (21) eingegebenen Befehls periodisch in die zum Touchscreen (21) im wesentlichen senkrechte Richtung bewegbar ist.

5. Anzeigevorrichtung (4,14,20,40) nach einem oder mehreren der vorhergehenden Ansprüche,
**dadurch gekennzeichnet, dass**
der Touchscreen (21) zur Bestätigung des mittels des Touchscreens (21) eingegebenen Befehls periodisch mit einer Frequenz zwischen 10 und 80Hz in die zum Touchscreen (21) im wesentlichen senkrechte Richtung bewegbar ist.

6. Anzeigevorrichtung (4,14,20,40) nach einem oder mehreren der vorhergehenden Ansprüche,
**dadurch gekennzeichnet, dass**
der Touchscreen (21) zur Bestätigung des mittels des Touchscreens (21) eingegebenen Befehls mit einer abklingenden Schwingung (32) in die zum Touchscreen (21) im wesentlichen senkrechte Richtung bewegbar ist.

7. Anzeigevorrichtung (4,14,20,40) nach Anspruch 6,
**dadurch gekennzeichnet, dass**
die abklingende Schwingung (32) eine Hüllkurve (33,34) mit einem exponentiellen Anteil aufweist.

8. Anzeigevorrichtung (4,14,20,40) nach einem oder mehreren der vorhergehenden Ansprüche,
**dadurch gekennzeichnet, dass**
der Aktor (22,23) mittels der Steuerung (25) zudem derart ansteuerbar ist, dass der Touchscreen (21) in die zum Touchscreen (21) im wesentlichen senkrechte Richtung bewegbar ist, wenn ein Benutzer des Touchscreens (21) diesen an einer mittels des Touchscreens (21) anzeigbaren Stelle berührt.

9. Anzeigevorrichtung (4,14,20,40) nach Ansruch 8,
**dadurch gekennzeichnet, dass**
die mittels des Touchscreens (21) anzeigbare Stelle ein auf dem Touchscreen (21) dargestelltes Bedienelement (103,104) und/oder eine auf dem Touchscreen (21) dargestellte Taste und/oder eine auf dem Touchscreen (21) dargestellte Straße (121) und/oder eine auf dem Touchscreen (21) dargestellte Ansiedlung (120) und/oder eine auf dem Touchscreen (21) dargestellte Ortsangabe (122) ist.

10. Anzeigevorrichtung (4,14,20,40) nach einem oder mehreren der vorhergehenden Ansprüche,
**dadurch gekennzeichnet, dass**
die Anzeigevorrichtung (4,14,20,40) ein Navigationssystem ist, dass einen Touchscreen (21) zur optischen Darstellung einer Land- oder Straßenkarte (60) und zur Erkennung einer Berührung des Touchscreens (21) durch einen Benutzer des Navigationssystems und einen Aktor (22,23) zum Bewegen des Touchscreens (21) in Abhängigkeit einer Position der Berührung des Touchscreens (21) durch den Benutzer aufweist.

11. Verfahren zum Betrieb eines Touchscreens (21) zur optischen Darstellung von Informationen und zur Eingabe von Befehlen,
**dadurch gekennzeichnet, dass**
der Touchscreens (21) zum Bestätigen eines mittels des Touchscreens (21) eingegebenen Befehls in eine zum Touchscreen (21) im wesentlichen senkrechte Richtung bewegt wird.

12. Verfahren nach Anspruch 11,
**dadurch gekennzeichnet, dass**
der Touchscreen (21) um mehr als 2mm, vorzugsweise um mehr als 3mm, insbesondere um mehr als 4mm in die zum Touchscreen (21) im wesentlichen senkrechte Richtung bewegt wird.

13. Verfahren nach einem oder mehreren der Ansprüche 11 und 12,
**dadurch gekennzeichnet, dass**
der Touchscreen (21) zur Bestätigung des mittels des Touchscreens (21) eingegebenen Befehls für eine Dauer zwischen 50ms und 800ms, vorzugsweise zwischen 100ms und 400ms in die zum Touchscreen (21) im wesentlichen senkrechte Richtung bewegt wird.

14. Verfahren nach einem oder mehreren der Ansprüche 11 bis 13,
**dadurch gekennzeichnet, dass**
der Touchscreen (21) zur Bestätigung des mittels des Touchscreens (21) eingegebenen Befehls periodisch in die zum Touchscreen (21) im wesentlichen senkrechte Richtung bewegt wird.

15. Verfahren nach einem oder mehreren der Ansprüche 11 bis 14,
**dadurch gekennzeichnet, dass**
der Touchscreen (21) zur Bestätigung des mittels des Touchscreens (21) eingegebenen Befehls periodisch mit einer Frequenz zwischen 10 und 80Hz in
die zum Touchscreen (21) im wesentlichen senkrechte Richtung bewegt wird.

16. Verfahren nach einem oder mehreren der Ansprüche 11 bis 15,
**dadurch gekennzeichnet, dass**
der Touchscreen (21) zur Bestätigung des mittels des Touchscreens (21) eingegebenen Befehls mit einer abklingenden Schwingung (32) in die zum Touchscreen (21) im wesentlichen senkrechte Richtung bewegt wird.

17. Verfahren nach einem oder mehreren der Ansprüche 11 bis 16,
**dadurch gekennzeichnet, dass**
der Touchscreen (21) in die zum Touchscreen (21) im wesentlichen senkrechte Richtung bewegt wird, wenn ein Benutzer des Touchscreens (21) diesen an einer mittels des Touchscreens (21) anzeigbaren Stelle berührt.

18. Verfahren nach einem oder mehreren der Ansprüche 11 - 17
**dadurch gekennzeichnet, dass**
das Verfahren zum Betrieb eines Navigationssystems mit einem Touchscreen (21) zur optischen Darstellung einer Land- oder Straßenkarte (60) verwendet wird und das Verfahren eine Erkennung einer Berührung des Touchscreens (21) durch einen Benutzer des Navigationssystems an einer auf dem Touchscreen (21) zur Hervorhebung markierten Position; und das Bewegen des Touchscreens (21) in eine zum Touchscreen (21) im wesentlichen senkrechte Richtung umfasst.
